# EUROPÄISCHE PATENTSCHRIFT

(11) **EP 2 696 514 B1**
(45) Veröffentlichungstag und Bekanntmachung des Hinweises auf die Patenterteilung: **10.01.2018**
(21) Anmeldenummer: 13005254.1
(22) Anmeldetag: 07.03.2009
(51) Int. Cl.: H04B 7/155

(54) **TDD-REPEATER FÜR EIN DRAHTLOSES NETZWERK**
TDD REPEATER FOR A WIRELESS NETWORK
RÉPÉTEUR TDD POUR UN RÉSEAU SANS FIL

(30) Priorität: 09.04.2008 DE 102008017881
(43) Veröffentlichungstag der Anmeldung: 12.02.2014
(62) Teilanmeldung aus: 09730690.6
(73) Patentinhaber: Andrew Wireless Systems GmbH, 86675 Buchdorf (DE)
(72) Erfinder: Schmid, Peter, DE - 86688 Marxheim-Neuhausen (DE); Braz, Oliver, DE - 86653 Monheim (DE); Gunzner, Peter, DE - 86653 Monheim (DE); Schmalisch, Mathias, Lynchburg, VA 24502 (US); Stefanik, Jörg, DE - 86609 Donauwörth (DE)
(74) Vertreter: FDST Patentanwälte

(56) Entgegenhaltungen:
- US-A1- 2007 268 846

## Beschreibung

Die Erfindung bezieht sich auf einen Repeater zur Übertragung von Kommunikationssignalen in einem drahtlosen Netz - beispielsweise einem Mobilfunknetz oder einem sogenannten "Wireless Local Area Network" (WLAN) - nach dem sogenannten Time-Division-Duplex(TDD)-Verfahren. Die Erfindung bezieht sich weiterhin auf ein Verfahren zum Betrieb eines solchen Repeaters.

Innerhalb eines Drahtlos-Netzes erfolgt üblicherweise eine Kommunikation zwischen sogenannten Basisstationen und Datenempfängern und -sendern, die nachfolgend als Netzendgeräte bezeichnet sind. Im Falle eines Mobilfunknetzes handelt es sich bei diesen Netzendgeräten um Mobilfunkendgeräte ("Handys"), im Falle eines WLAN typischerweise um mobile Computer ("Laptops") mit entsprechender Netzkarte. Bei dem Datenaustausch zwischen der Basisstation und einem Netzendgerät werden Funksignale einerseits in einer sogenannten "Downlink-Richtung" von der Basisstation an das Netzendgerät und andererseits in einer sogenannten "Uplink-Richtung" von dem Netzendgerät an die Basisstation übertragen. Um den Signalverkehr in Uplink-Richtung und Downlink-Richtung voneinander trennen zu können, wird u. a. das sogenannte Time-Division-Duplex(TDD)-Verfahren (Zeitduplexverfahren) eingesetzt. Bei dem TDD-Verfahren wird die gleiche Übertragungsfrequenz sowohl in Uplink- als auch in Downlink-Richtung eingesetzt. Für eine ungestörte Signalübertragung wird jeder Signalrichtung jeweils ein definiertes Zeitfenster zugewiesen, so dass mit einer bestimmten Taktung abwechselnd in Uplink- und Downlink-Richtung gesendet wird. Die Taktung wird üblicherweise von der Basisstation vorgegeben.

Um eine Signalübertragung auch in einem für Funkwellen abgeschatteten Gebiet, wie beispielsweise in einem Tunnel oder einem Gebäude, zu ermöglichen, werden sogenannte Repeater eingesetzt, die übertragungstechnisch der Basisstation und den Netzendgeräten zwischengeschaltet sind. Ein auf dem TDD-Verfahren arbeitender Repeater ist beispielsweise aus US 2007/0015462 A1 und aus EP2007/0268846 A1 bekannt.

In einer auch als Verteilsystem bezeichneten Bauform umfasst ein solcher Repeater eine Mastereinheit, die insbesondere mit der Basisstation des Funknetzes kommuniziert, sowie mindestens eine sogenannte "Remote-Unit", welche - beispielsweise im Gebäude angeordnet - den Kontakt zu dem Netzendgerät herstellt. Die Signalübertragung zwischen der Mastereinheit und der Remote-Unit erfolgt dabei häufig in Form eines optischen Kommunikationssignals über Lichtwellenleiter, beispielsweise Glasfaserkabel.

Dabei leitet die Mastereinheit das ihr von der Basisstation zugehende Signal in der Downlink-Richtung an die Remote-Unit weiter. Umgekehrt leitet die Remote-Unit ein von dem Mobilfunkendgerät kommendes Signal in der Uplink-Richtung an die Mastereinheit weiter. Häufig werden hierbei die Signale in Uplink- und Downlink-Richtung über einen gemeinsamen Wellenleiter übertragen.

Um einen solchen Repeater im Rahmen einer TDD Signalübertragung einsetzen zu können, muss die Signalübertragung über den Wellenleiter an die vorgegebene Taktung der umgebenden Funksignalübertragung angepasst sein. Insbesondere müssen die Mastereinheit und die Remote-Unit nach Maßgabe der Taktung aufeinander synchronisiert sein.

Der Erfindung liegt die Aufgabe zugrunde, einen Repeater anzugeben, der für eine Time-Division-Duplex Übertragung von Kommunikationssignalen besonders geeignet ist. Als Kommunikationssignale sind in diesem Zusammenhang - im Gegensatz zu repeaterinternen Signalen - diejenigen Signale bezeichnet, die über den Repeater hinweg zwischen der Basisstation und den Netzendgeräten übertragen werden. Der Erfindung liegt weiterhin die Aufgabe zugrunde, ein zum Betrieb eines solchen Repeaters besonders geeignetes Verfahren anzugeben.

Bezüglich des Repeaters wird diese Aufgabe erfindungsgemäß gelöst durch die Merkmale des Anspruchs 1. Danach umfasst der Repeater eine Mastereinheit zur Kommunikation mit einer Basisstation eines Drahtlos-Netzes, mindestens eine Remote-Unit zur Kommunikation mit einem Netzendgerät, sowie einen die Remote-Unit mit der Mastereinheit verbindenden Wellenleiter zur Übertragung der Kommunikationssignale in einer Uplink-Richtung von der Remote-Unit zur Mastereinheit und in einer Downlink-Richtung von der Mastereinheit zur Remote-Unit. Sowohl die Mastereinheit als auch die Remote-Unit umfassen jeweils einen - nachfolgend als (Zeit-)Duplexer bezeichneten - Schalter zur Umschaltung zwischen der Signalübertragung in Uplink-Richtung und der Signalübertragung in Downlink-Richtung. Beide Duplexer werden von einer in der Mastereinheit angeordneten Synchronisationseinheit angesteuert, die dazu ausgebildet ist, aus dem der Mastereinheit - insbesondere von der Basisstation - zugeführten Kommunikationssignal eine Taktung zu ermitteln und ein dieser Taktung entsprechendes Steuersignal an die Duplexer abzugeben.

Mit dem vorgeschlagenen Repeater ist es auf einfache und effektive Weise möglich, die Übertragung bzw. Übertragungsrichtung der Kommunikationssignale an eine von der Basisstation vorgegebene Taktung anzupassen. Als besonders vorteilhaft zeigt es sich dabei, dass bei dem vorgeschlagenen Repeater auch der Duplexer der Remote-Unit durch die in der Mastereinheit angeordnete Synchronisationseinheit mitsynchronisiert wird, wodurch der Repeater besonders rationell ausgebildet werden kann.

Der Repeater ist bevorzugt für eine optische Signalübertragung zwischen der Mastereinheit und der Remote-Unit ausgelegt. In diesem Fall handelt es sich bei dem Wellenleiter um einen Lichtwellenleiter, insbesondere ein Glasfaserkabel. Alternativ hierzu kann aber auch eine elektrische Signalübertragung zwischen der Mastereinheit und der Remote-Unit vorgesehen sein. In diesem Fall ist der Wellenleiter insbesondere als Koaxialkabel oder Hohlleiter ausgebildet.

In einer besonders effektiven Ausführungsform der Erfindung ist der Repeater dazu eingerichtet, das Steuersignal zur Ansteuerung des Duplexers der Remote-Unit als (optisches oder elektrisches) Signal über den - zum Austausch des Kommunikationssignals ohnehin vorgesehenen - Wellenleiter an die Remote-Unit zu übertragen. Eine einfache Trennung des Steuersignals von dem - über denselben Wellenleiter übertragenen - Kommunikationssignal wird dabei insbesondere dadurch ermöglicht, dass die Synchronisationseinheit das Steuersignal mit einer von dem Kommunikationssignal unterschiedlichen Modulationsfrequenz versieht.

Zur Erfassung der Taktung umfasst die Synchronisationseinheit zweckmäßigerweise einen Koppler, mit dem sie das Kommunikationssignal abgreift. Die Synchronisationseinheit ermittelt dabei ein dem Kommunikationssignal überlagertes Taktsignal, das beispielsweise durch einen sogenannten "Pilotton" oder eine Synchronisationssequenz in einer Präambel eines Übertragungsrahmens des Kommunikationssignals gebildet sein kann. Insbesondere umfasst die Synchronisationseinheit zur Extraktion des Taktsignals aus dem Kommunikationssignal einen insbesondere als Mikrocontroller ausgebildeten Schaltkreis, dem das ausgekoppelte Signal zugeführt ist.

Bevorzugt wird das Steuersignal zunächst in Form eines elektrischen Radiofrequenz(RF)-Signals erzeugt. Die Synchronisationseinheit umfasst hierzu einen Frequenzgenerator. Zur Übertragung an die Remote-Unit wird dieses RF-Steuersignal bevorzugt in ein optisches Steuersignal umgewandelt und über den Wellenleiter an die Remote-Unit übertragen. Die Mastereinheit umfasst hierzu zweckmäßigerweise einen optischen Sender (Transmitter). In der Remote-Unit wird das Steuersignal in diesem Fall mit einem dort befindlichen optischen Empfänger (Receiver) wieder in ein elektrisches Steuersignal umgewandelt und zur Ansteuerung des in der Re-mote-Unit angeordneten Duplexers eingesetzt.

In einer weiteren Ausführungsform der Erfindung umfasst der Repeater mindestens zwei Remote-Units, welche über je einen separaten Wellenleiter mit der Mastereinheit verbunden sind. Jede dieser Remote-Units umfasst einen Duplexer. Zudem ist auch in der Mastereinheit für jede Remote-Unit ein Duplexer vorgesehen. Rationellerweise sind dabei alle Duplexer durch eine gemeinsame - wiederum in der Mastereinheit angeordnete - Synchronisationseinheit angesteuert.

Zusätzlich oder alternativ dazu umfasst der Repeater mindestens zwei Remote-Units, welche über einen gemeinsamen Wellenleiter mit der Mastereinheit verbunden sind. Der Repeater ist hierbei daraufhin ausgelegt, die einer jeden Remote-Unit zugeordneten Signale auf unterschiedliche Übertragungs-Wellenlängen aufzumodulieren, so dass diese Signale über ihre spezifische Übertragungswellenlänge trennbar sind.

In einer bevorzugten Ausführungsform des Repeaters sind insbesondere mehrere Remote-Units in einer sogenannten mxn MIMO (Multiple Input Multiple Output; m,n=2,3,...) Konfiguration an die Mastereinheit angeschlossen. Hierbei beinhaltet die Mastereinheit mehrere getrennte, jeweils mit einer Remote-Unit korrespondierende Übertragungsstrecken. Die Mastereinheit ist andererseits mit zwei Antennenanschlussstellen zur Signalübertragung mit der Basisstation versehen.

Bezüglich des Verfahrens wird die Aufgabe unter Nutzung des vorstehend beschriebenen Repeaters erfindungsgemäß gelöst durch ein Verfahren zum Betrieb eines vorbeschriebenen Repeaters, wobei von der in der Mastereinheit angeordneten Synchronisationseinheit aus dem der Mastereinheit zugeführten Kommunikationssignal eine Taktung ermittelt und ein dieser Taktung entsprechendes Steuersignal an die in der Mastereinheit und in der oder jeder Remote-Unit angeordneten Schalter abgegeben wird, und wobei mit diesem Steuersignal sowohl der Schalter der Mastereinheit als auch der Schalter der oder jeder Remote-Unit derart angesteuert werden, dass die Schalter synchron mit der vorgegebenen Taktung zwischen einer Signalübertragung in Uplink-Richtung und einer Signalübertragung in Downlink-Richtung umschalten.

Danach ist vorgesehen, von der Synchronisationseinheit anhand eines - insbesondere von der Basisstation - vorgegebenen Taktsignals ein Steuersignal zu erzeugen, und mit diesem Steuersignal sowohl den Duplexer der Mastereinheit als auch den Duplexer der Remote-Unit derart anzusteuern, dass die Umschaltung der Signalübertragung zwischen Uplink- und Downlink-Richtung synchron - also näherungsweise zeitgleich - mit der vorgegebenen Taktung erfolgt.

Bei der synchronen Ansteuerung der Duplexer wird aber bevorzugt die Laufzeit der Kommunikationssignale zwischen der Mastereinheit und der Remote-Unit berücksichtigt. Die in der Mastereinheit bzw. der der Remote-Unit angeordneten Duplexer werden dabei nicht exakt zeitgleich, sondern mit einem geringen Zeitversatz geschaltet, der etwa der Signallaufzeit entspricht. Die Umschaltung des Schalters in der Mastereinheit und des Schalters in der Remote-Unit erfolgt somit vorteilhafterweise um eine etwa der Signallaufzeit zwischen der Mastereinheit und der Remote-Unit entsprechende Zeitspanne zeitversetzt.

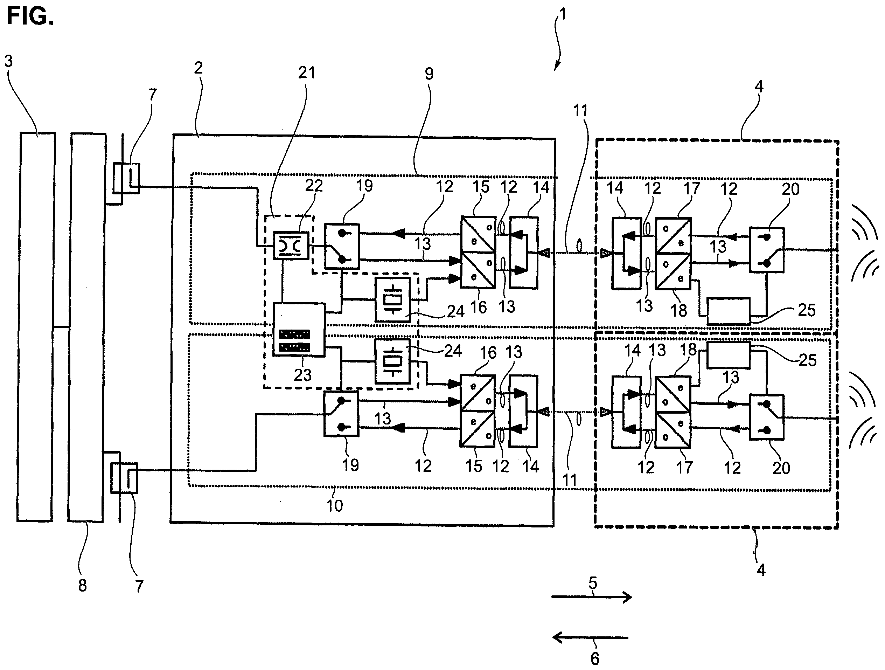

Nachfolgend wird ein Ausführungsbeispiel der Erfindung anhand einer Zeichnung näher erläutert. Darin zeigt die einzige Figur in schematischer Darstellung einen Repeater 1 eines Drahtlos-Netzes zur sogenannten "Time-Division-Duplex" Signalübertragung in ein für Funkwellen abgeschattetes Gebiet, wie beispielsweise ein Gebäude.

Der Repeater 1 umfasst eine Mastereinheit 2, welche - hier leitungsgebunden - mit einer Basisstation 3 (in der vorliegenden Figur links dargestellt) des Drahtlos-Netzes kommuniziert. Außerdem umfasst der Repeater 1 zwei Remote-Units 4 (in der vorliegenden Figur rechts dargestellt), welche - beispielsweise im Gebäude angeordnet - über schematisch angedeutete Funkwellen mit einem mobilen Netzendgerät (z.B. einem Laptop oder Handy) kommunizieren. Dabei wird ein von der Basisstation 3 ankommendes Radiofrequenz (RF) -Kommunikationssignal in einer sogenannten (durch einen Pfeil gekennzeichneten) Downlink-Richtung 5 als optisches Kommunikationssignal an die Remote-Units 4 weitergeleitet, dort in ein Funksignal rückgewandelt und an das Netzendgerät ausgesandt. Umgekehrt wird in einer sogenannten (wiederum durch einen Pfeil gekennzeichneten) Uplink-Richtung 6 ein von dem Netzendgerät ausgehendes Kommunikationssignal als optisches Kommunikationssignal an die Mastereinheit 2 weitergeleitet und von dort an die Basisstation 3 übertragen.

Der Repeater 1 ist hier in einer sogenannte "2x2 Multiple Input Multiple Output" (MIMO) Konfiguration ausgebildet. Dementsprechend verfügt die Basisstation 3 über zwei Antennenanschlussstellen 7, welche über eine Antenne oder Verteilerschiene 8 mit der Basisstation 3 verbunden sind. Andererseits erfolgt die Signalübertragung zu den beiden Remote-Units 4 über zwei getrennte Kanäle, nämlich über eine erste (schematisch angedeutete) Übertragungsstrecke 9 und eine zweite (wiederum schematisch angedeutete) Übertragungsstrecke 10. Dabei umfasst jede Übertragungsstrecke 9, 10 zur optischen Signalübertragung einen separaten Lichtwellenleiter, hier als Glasfaserkabel 11 ausgeführt, über welchen jede Remote-Unit 4 mit der Mastereinheit 2 verbunden ist. Alternativ hierzu ist auch eine durch eine Frequenzumwandlung signaltechnisch getrennte Signalübertragung über einen gemeinsamen Lichtwellenleiter möglich (Frequenz Duplex).

Der Repeater 1 ist für eine Signalübertragung nach dem sogenannten Time-Division-Duplex-Verfahren (Zeitduplexverfahren) ausgebildet. Hierbei werden die (optischen) Kommunikationssignale nach einer von der Basisstation 3 vorgegebenen Taktung zeitlich abwechselnd in Downlink-Richtung 5 bzw. Uplink-Richtung 6 übertragen. Hierzu ist jede Übertragungsstrecke 9, 10 sowohl innerhalb der Mastereinheit 2 als auch innerhalb der Remote-Unit 4 in eine - teils optische, teils elektrische - Uplink-Strecke 12 und in eine Downlink-Strecke 13 aufgespalten. Dabei ist jeweils der optische Teil der Strecke über eine Y-Verbindung 14 mit dem Glasfaserkabel 11 gekoppelt. Der elektrische Teil steht zumindest indirekt mit der Basisstation 3 bzw. mit dem mobilen Datenempfänger / -sender in Verbindung. Innerhalb jeder Strecke wird das Kommunikationssignal von einem optischen Signal in ein elektrisches Signal oder umgekehrt gewandelt. Hierzu umfasst die Mastereinheit 2 innerhalb jeder Uplink-Strecke 12 einen optischen Empfänger 15, bzw. innerhalb jeder Downlink-Strecke 13 einen optischen Sender 16. Jede Remote-Unit 4 hingegen umfasst innerhalb der Uplink-Strecke 12 einen optischen Sender 17 bzw. innerhalb der Downlink-Strecke 13 einen optischen Empfänger 18.

Zur Umschaltung der Übertragungsrichtung umfasst die Mastereinheit 2 für jede Übertragungsstrecke 9, 10 einen (Zeit-)Duplexer 19, mit welchem im elektrischen Teil zwischen der Uplink-Strecke 12 und der Downlink-Strecke 13 umgeschaltet wird. Je nach Stellung des Duplexers 19 ist somit entweder die Uplink-Strecke 12 oder die Downlink-Strecke 13 mit der Basisstation 3 verbunden. Andererseits umfasst jede Remote-Unit 4 innerhalb des elektrischen Teils der Übertragungsstrecke 9, 10 auch einen (Zeit-)Duplexer 20, mit welchem je nach Schalterstellung entweder die Uplink-Strecke 12 oder die Downlink-Strecke 13 zur Kommunikation mit dem mobilen Datenempfänger / - sender verbunden wird. Die hier dargestellte Schalterposition entspricht beispielsweise gerade einer Übertragung in Downlink-Richtung 6.

Um die Taktung der optischen Übertragung mit der Taktung der Basisstation 3 zu synchronisieren, umfasst die Mastereinheit 2 eine Synchronisationseinheit 21, welche ein von der Basisstation 3 ausgehendes Taktsignal abgreift und dementsprechend einerseits die Duplexer 19 und andererseits jeden Duplexer 20 ansteuert.

Hierzu verfügt die Synchronisationseinheit 21 über einen Koppler 22, mit welchem das der Mastereinheit 2 von der Basisstation 3 zugeführte Kommunikationssignal ausgekoppelt wird. In der dargestellten Ausführungsform der Erfindung greift der Koppler 22 dabei auf die erste Übertragungsstrecke 9 zu.

Diesem Kommunikationssignal ist ein Taktsignal beispielsweise als sogenannter Pilotton überlagert. Alternativ ist das Taktsignal als sogenannte Präambel eines Signalübertragungsrahmens vorgeschaltet. Dieses Taktsignal wird von der Synchronisationseinheit 21 identifiziert.

Hierzu umfasst die Synchronisationseinheit 21 einen integrierten Schaltkreis, insbesondere einen Mikrocontroller, hier als "Switching-Point-Detector" 23 bezeichnet, welcher mit dem Koppler 22 signaltechnisch verbunden ist. Anhand des ausgekoppelten Signals entscheidet der Switching-Point-Detector 23, ob die Basisstation 3 gerade sendet (Übertragung in Downlink-Richtung 5) oder empfängt (Übertragung in Uplink-Richtung 6). Dementsprechend steuert der Switching-Point-Detector 23 beide Duplexer 19 der Mastereinheit 2 unmittelbar an.

Um außerdem die Duplexer 20 der Remote-Units 4 zu synchronisieren, wird anhand des ausgekoppelten Taktsignals über jedes Glasfaserkabel 11 ein optisches Steuersignal an diese übertragen. Hierzu verfügt die Synchronisationseinheit 21 für jede Übertragungsstrecke 9, 10 jeweils über einen Frequenzgenerator 24. Jeder Frequenzgenerator 24 ist ebenfalls mit dem Switching-Point-Detector 23 signaltechnisch gekoppelt und erzeugt aufgrund dessen Information ein RF-Steuersignal zur Ansteuerung des korrespondierenden Duplexers 20. Das RF-Steuersignal wird jeweils durch den optischen Sender 16 der Mastereinheit 2 in ein optisches Steuersignal umgewandelt und gemeinsam mit dem optischen Kommunikationssignal über das Glasfaserkabel 11 an die Remote-Unit 4 übertragen. Dabei werden das Steuersignal und das Kommunikationssignal zur Signaltrennung mit unterschiedlicher Modulationsfrequenz gesendet. Innerhalb der Remote-Unit 4 wird das optische Steuersignal durch den optischen Empfänger 18 in ein elektrisches rückgewandelt. Dieses Steuersignal dient wiederum als Signalgeber für eine Ansteuereinheit 25, welche schließlich den Duplexer 20 taktet.

Beide Duplexer 19, 20 einer jeden Übertragungsstrecke 9,10 werden somit synchron getaktet, wodurch die Übertragungsrichtung der Kommunikationssignale auf dem optischen Übertragungsabschnitt der Übertragungsrichtung der umgebenden Funkübertragung angepasst wird. Bei Sendebetrieb der Basisstation 3 sind somit beide Duplexer 19, 20 für eine Übertragung in Downlink-Richtung 5 geschaltet, wohingegen die Duplexer 19, 20 bei Empfangsbetrieb der Basisstation 3 für eine Übertragung in Uplink-Richtung 6 geschaltet sind.

### Bezugszeichenliste

- 1: Repeater
- 2: Mastereinheit
- 3: Basisstation
- 4: Remote-Unit
- 5: Downlink-Richtung
- 6: Uplink-Richtung
- 7: Antennenanschlussstelle
- 8: Verteilerschiene
- 9: Übertragungsstrecke
- 10: Übertragungsstrecke
- 11: Glasfaserkabel
- 12: Uplink-Strecke
- 13: Downlink-Strecke
- 14: Y-Verbindung
- 15: Empfänger
- 16: Sender
- 17: Sender
- 18: Empfänger
- 19: (Zeit-)Duplexer
- 20: (Zeit-)Duplexer
- 21: Synchronisationseinheit
- 22: Koppler
- 23: Switching-Point-Detector
- 24: Frequenzgenerator
- 25: Ansteuereinheit

## Patentansprüche

1. TDD-Repeater (1) zur Übertragung von Kommunikationssignalen in einem Drahtlos-Netz,
- mit einer Mastereinheit (2) zur Kommunikation mit einer Basisstation (3) des Drahtlos-Netzes,
- mit mindestens einer Remote-Unit (4) zur Kommunikation mit einem Netzendgerät, und
- mit einem die Remote-Unit (4) mit der Mastereinheit (2) verbindenden Wellenleiter (11) zur Übertragung der Kommunikationssignale in einer Uplink-Richtung (6) von der Remote-Unit (4) zur Mastereinheit (2) und in einer Downlink-Richtung (5) von der Mastereinheit (2) zur Remote-Unit (4),
- wobei sowohl die Mastereinheit (2) als auch die Remote-Unit (4) einen Schalter (19, 20) zur Umschaltung zwischen der Signalübertragung in Uplink-Richtung (6) und der Signalübertragung in Downlink-Richtung (5) umfassen, und
- wobei die Mastereinheit (2) eine Synchronisationseinheit (21) umfasst, die dazu ausgebildet ist, aus dem der Mastereinheit (2) zugeführten Kommunikationssignal eine Taktung zu ermitteln und ein dieser Taktung entsprechendes Steuersignal an die Schalter (19, 20) abzugeben, und wobei die Synchronisationseinheit (21) im Betrieb das Steuersignal an den in der Remote-Unit (4) angeordneten Schalter (20) abgibt.

2. Repeater (1) nach Anspruch 1, wobei die Synchronisationseinheit (21) dazu ausgebildet ist, das Steuersignal zur Ansteuerung des in der Remote-Unit (4) angeordneten Schalters (20) über den Wellenleiter (11) an die Remote-Unit (4) zu übertragen.

3. Repeater (1) nach Anspruch 1 oder 2, wobei die Synchronisationseinheit (21) einen Frequenzgenerator (24) zur Erzeugung eines RF-Steuersignals zur Ansteuerung des in der Remote-Unit (4) angeordneten Schalters (20) umfasst.

4. Repeater (1) nach Anspruch 3, wobei der Frequenzgenerator (24) dazu ausgebildet ist, das Steuersignal zur Ansteuerung des in der Remote-Unit (4) angeordneten Schalters (20) mit einer zu dem Kommunikationssignal verschiedenen Modulationsfrequenz zu erzeugen.

5. Repeater (1) nach einem der Ansprüche 1 bis 4, wobei die Synchronisationseinheit (21) einen Koppler (22) zur Auskopplung des Kommunikationssignals aus einer Übertragungsstrecke der Mastereinheit (2) umfasst.

6. Repeater (1) nach einem der Ansprüche 1 bis 5, mit zwei Remote-Units (4), die über je einen separaten Wellenleiter (11) mit der Mastereinheit (2) verbunden sind, wobei jedem Wellenleiter (11) sowohl in der Mastereinheit (2) als auch in der Remote-Unit (4) jeweils ein Schalter (19, 20) zugeordnet ist, und wobei jeder Schalter (19, 20) von der Synchronisationseinheit (21) angesteuert ist.

7. Repeater (1) nach einem der Ansprüche 1 bis 6, mit zwei Remote-Units (4), die über einen gemeinsamen Wellenleiter (11) mit der Mastereinheit (2) verbunden sind, wobei die Kommunikationssignale der einzelnen Remote-Units (4) unterschiedliche Übertragungs-Wellenlängen aufweisen.

## Claims

1. TDD repeater (1) for transmitting communication signals in a wireless network,
- having a master unit (2) for communication with a base station (3) of the wireless network,
- having at least one remote unit (4) for communication with a network terminal, and
- having a waveguide (11), connecting the remote unit (4) to the master unit (2), for transmitting the communication signals in an uplink direction (6) from the remote unit (4) to the master unit (2) and in a downlink direction (5) from the master unit (2) to the remote unit (4),
- wherein both the master unit (2) and the remote unit (4) comprise a switch (19, 20) for changing over between the signal transmission in the uplink direction (6) and the signal transmission in the downlink direction (5), and
- wherein the master unit (2) comprises a synchronization unit (21) that is configured to ascertain a clocking from the communication signal supplied to the master unit (2) and to deliver a control signal corresponding to this clocking to the switches (19, 20), and wherein the synchronization unit (21), during operation, delivers the control signal to the switch (20) arranged in the remote unit (4).

2. Repeater (1) according to Claim 1, wherein the synchronization unit (21) is configured to transmit the control signal for actuating the switch (20) arranged in the remote unit (4) to the remote unit (4) via the waveguide (11).

3. Repeater (1) according to Claim 1 or 2, wherein the synchronization unit (21) comprises a frequency generator (24) for producing an RF control signal for actuating the switch (20) arranged in the remote unit (4).

4. Repeater (1) according to Claim 3, wherein the frequency generator (24) is configured to produce the control signal for actuating the switch (20) arranged in the remote unit (4) at a modulation frequency that is different from the communication signal.

5. Repeater (1) according to one of Claims 1 to 4, wherein the synchronization unit (21) comprises a coupler (22) for coupling the communication signal out of a transmission link of the master unit (2).

6. Repeater (1) according to one of Claims 1 to 5, having two remote units (4) that are connected to the master unit (2) via a separate waveguide (11) each, wherein each waveguide (11) has a respective associated switch (19, 20) both in the master unit (2) and in the remote unit (4), and wherein each switch (19, 20) is actuated by the synchronization unit (21).

7. Repeater (1) according to one of Claims 1 to 6, having two remote units (4) that are connected to the master unit (2) via a common waveguide (11), wherein the communication signals of the individual remote units (4) have different transmission wavelengths.

## Revendications

1. Répéteur TDD (1) destiné à transmettre des signaux de communication au sein d'un réseau sans fil,
- avec une unité maître (2), destinée à communiquer avec un poste de base (3) du réseau sans fil,
- avec au moins une unité distante (4), destinée à communiquer avec un terminal de réseau et
- avec un guide d'ondes (11) reliant l'unité distante (4) avec l'unité maître (2), destiné à transmettre les signaux de communication dans une direction ascendante (6) de l'unité distante (4) vers l'unité maître (2) et dans une direction descendante (5) de l'unité maître (2) vers l'unité distante (4),
- aussi bien l'unité maître (2) qu'également l'unité distante (4) comprenant un commutateur (19, 20) pour commuter entre la transmission de signaux dans la direction ascendante (6) et la transmission de signaux dans la direction descendante (5) et
- l'unité maître (2) comprenant une unité de synchronisation (21) qui est conçue pour déterminer un cadencement à partir du signal de communication amené vers l'unité maître (2) et pour délivrer aux commutateurs (19, 20) un signal de commande correspondant audit cadencement et l'unité de synchronisation (21) délivrant en service le signal de commande au commutateur (20) placé dans l'unité distante (4).

2. Répéteur (1) selon la revendication 1, l'unité de synchronisation (21) étant conçue pour transmettre par l'intermédiaire du guide d'ondes (11) à l'unité distante (4) le signal de commande destiné à amorcer le commutateur (20) placé dans l'unité distante (4).

3. Répéteur (1) selon la revendication 1 ou 2, l'unité de synchronisation (21) comprenant un générateur de fréquences (24) pour générer un signal de commande RF destiné à amorcer le commutateur (20) placé dans l'unité distante (4).

4. Répéteur (1) selon la revendication 3, le générateur de fréquences (24) étant conçu pour générer avec une fréquence de modulation différente du signal de communication le signal de commande destiné à amorcer le commutateur (20) placé dans l'unité distante (4).

5. Répéteur (1) selon l'une quelconque des revendications 1 à 4, l'unité de synchronisation (21) comprenant un coupleur (22) destiné à découpler le signal de communication à partir d'un trajet de transmission de l'unité maître (2).

6. Répéteur (1) selon l'une quelconque des revendications 1 à 5, avec deux unités distantes (4), qui sont reliées chacune par un guide d'ondes (11) séparé avec l'unité-maître (2), à chaque guide d'ondes (11), aussi bien dans l'unité maître (2) qu'également dans l'unité distante (4) étant associé respectivement un commutateur (19, 20) et chaque commutateur (19, 20) étant amorcé par l'unité de synchronisation (21).

7. Répéteur (1) selon l'une quelconque des revendications 1 à 6, avec deux unités distantes (4) qui sont reliées avec l'unité maître (2) par l'intermédiaire d'un guide d'ondes (11) commun, les signaux de communication des unités distantes (4) individuelles faisant preuve de différentes longueurs d'ondes de transmission.
